(19) Europäisches Patentamt / European Patent Office / Office européen des brevets

(11) **EP 2 887 042 B1**

(12) **FASCICULE DE BREVET EUROPEEN**

(45) Date de publication et mention
de la délivrance du brevet:
**29.08.2018 Bulletin 2018/35**

(51) Int Cl.:
*G01L 19/08* *(2006.01)*    *G01D 13/26* *(2006.01)*

(21) Numéro de dépôt: **14198859.2**

(22) Date de dépôt: **18.12.2014**

(54) **Dispositif et procede de mesure de pression avec couplage electromagnetique**

Vorrichtung und Verfahren zum Druckmessen mit elektromagnetischer Kopplung

Device and method for measuring pressure with electromagnetic coupling

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **20.12.2013 FR 1363217**

(43) Date de publication de la demande:
**24.06.2015 Bulletin 2015/26**

(73) Titulaire: **Air Liquide Services**
**75007 Paris (FR)**

(72) Inventeurs:
• **Verpillat, Frédéric**
**92100 Boulogne-Billancourt (FR)**
• **Bacot, Patrick**
**92190 Meudon (FR)**

(74) Mandataire: **De Cuenca, Emmanuel Jaime**
**L'Air Liquide S.A.**
**Direction Propriété Intellectuelle**
**75 Quai d'Orsay**
**75321 Paris Cedex 07 (FR)**

(56) Documents cités:
**EP-A2- 2 327 964    US-A1- 2003 153 987**

• **"IEEE Standard for Safety Levels With Respect to Human Exposure to Radio Frequency Electromagnetic Fields, 3 kHz to 300 GHz;IEEE Std C95.1-2005 (Revision of IEEE Std C95.1-1991)", IEEE STANDARD, IEEE, PISCATAWAY, NJ, USA, 19 avril 2006 (2006-04-19), pages _1-238, XP017603874, ISBN: 978-0-7381-4834-2**

**Description**

L'invention concerne un dispositif de mesure à distance de la pression régnant à l'intérieur d'un récipient de fluide pressurisé ainsi qu'une installation configurée pour traiter les données mesurées par ledit dispositif et un procédé de mesure à distance de ladite pression.

Un fluide industriel ou médical est en général conditionné à l'état gazeux, liquide ou diphasique (gaz et liquide) dans un récipient de fluide, tel une bouteille, ledit récipient alimentant habituellement en fluide une installation ou un dispositif utilisateur dudit fluide. Typiquement, le récipient de fluide est conçu pour contenir un fluide pressurisé, c'est-à-dire un fluide à une pression supérieure à la pression de l'atmosphère ambiante.

Du fait de l'utilisation du fluide, il est nécessaire de procéder régulièrement au remplissage du récipient. La nécessité d'un remplissage dépend de l'évaluation de la quantité de fluide restant dans le récipient. A cette fin, le récipient de fluide est généralement équipé de manomètres mécaniques munis d'un afficheur, généralement un afficheur à aiguille, indiquant la pression régnant à l'intérieur du récipient de fluide.

Toutefois, ces manomètres imposent une lecture directe de l'afficheur par un opérateur et ne permettent pas d'automatiser le suivi du contenu du récipient de fluide et la logistique associée.

Pour remédier à cela, il est connu d'utiliser des manomètres électroniques à capteur de pression, par exemple de type piézo-électrique ou piézorésistif, ou encore à jauge de contrainte, qui fournissent un signal électrique représentatif de la pression dans le récipient de fluide.

Toutefois, ces dispositifs sont plus coûteux que les manomètres mécaniques classiques. Il s'ensuit une augmentation rédhibitoire du coût d'équipement au vu du grand nombre de récipients qui doit être généralement géré.

Une solution alternative consiste à convertir l'indication fournie par l'afficheur analogique des manomètres classiques en un signal électrique pouvant être transmis à distance. Ainsi, les documents EP-A-2327964, US-A-2002/0144555 et US-A-2009/0212767 divulguent un manomètre avec une aiguille munie d'un aimant permanent associée à un système de détection de la position de l'aimant. Par ailleurs, le document JP-A-61-193043 divulgue un manomètre à aiguille dont la position est détectée au moyen d'un système optique agencé en périphérie du cadran du manomètre.

Cependant, bien qu'autorisant une transmission du signal électrique au moyen d'un émetteur à distance, de tels dispositifs de mesure ne donnent pas entière satisfaction et ne résolvent pas le problème de l'alimentation électrique du dispositif de mesure.

En effet, la distance séparant le récipient de fluide et le système de réception du signal généré par le dispositif de mesure peut être de quelques mètres, voire plus. Pour assurer la transmission du signal sur cette distance, il est nécessaire de prévoir une source d'alimentation reliée électriquement au dispositif monté sur le récipient de fluide, d'une puissance de l'ordre de quelques mW typiquement. Or, ceci est pénalisant en termes de coût de fonctionnement, de complexification, de maintenance et d'encombrement du système.

Une alimentation par pile ou batterie incorporée au manomètre est aussi à proscrire car trop onéreuse et impliquant un remplacement régulier desdites pile ou batterie, étant données les puissances électriques mises en jeu, ce qui est contraignant en termes de maintenance.

En outre, il est préférable d'avoir une lecture qui ne dépend pas d'une source d'énergie, ceci afin de garantir la sécurité des installations en cas de coupure d'alimentation ou de déchargement de batterie.

On connaît du document US-A-2003/0153987 un capteur de pression muni d'un organe de couplage magnétique pour coupler le capteur à un émetteur/récepteur radio. Cet organe de couplage magnétique met en oeuvre une bobine d'induction et des ondes radio dont la fréquence est comprise entre quelques centaines de kHz et quelques dizaines de MHz. Or, le champ magnétique créé par une telle bobine décroît en $1/d^3$, d étant la distance séparant l'organe de couplage électromagnétique de l'émetteur/récepteur radio. Compte-tenu des normes en vigueur limitant la puissance d'émission de l'émetteur/récepteur à des valeurs de l'ordre du Watt, ce type de dispositif ne peut fonctionner qu'en champ proche, typiquement à des distances de quelques cm à quelques dizaines de cm.

Le problème à résoudre est dès lors de pallier tout ou partie des inconvénients mentionnés ci-dessus, notamment de proposer un dispositif de mesure de la pression régnant à l'intérieur d'un récipient de fluide pressurisé qui permette une lecture à distance de ladite pression, tout en évitant de relier le dispositif de mesure à une source d'alimentation électrique indépendante, la lecture pouvant être opérée, à puissance égale, à une distance plus grande que dans l'art antérieur.

A cette fin, la solution de l'invention est un dispositif de mesure de la pression régnant à l'intérieur d'un récipient de fluide pressurisé, ledit dispositif comprenant :

- un cadran comprenant un repère angulaire portant des indications représentatives de valeurs de pression,
- une aiguille mobile en rotation autour d'un axe transversal au cadran, ladite aiguille pouvant occuper plusieurs positions angulaires en regard du repère angulaire selon la valeur de la pression régnant à l'intérieur du récipient de fluide pressurisé,
- un organe d'indication de la position angulaire de l'aiguille, et
- une logique électronique reliée électriquement à l'organe d'indication de la position angulaire de l'aiguille, ladite logique électronique comprenant un capteur dudit organe d'indication et un circuit de mesure relié audit capteur dudit organe d'indication, ledit circuit de mesure étant configuré pour produire un signal électrique représentatif de la position angulaire de l'aiguille indiquée par l'organe d'indication et calculer une valeur de pression régnant à l'intérieur du récipient de fluide pressurisé à partir de ladite position angulaire de l'aiguille, caractérisé en ce qu'il comprend en outre :

- un organe de couplage électromagnétique relié électriquement à la logique électronique, ledit organe de couplage électromagnétique étant configuré pour alimenter électriquement la logique électronique et l'organe d'indication en convertissant un premier signal radio reçu par ledit organe de couplage électromagnétique, l'organe de couplage électromagnétique étant également configuré pour transmettre à distance via un deuxième signal radio la valeur de pression régnant à l'intérieur du récipient de fluide pressurisé, le premier signal radio et le deuxième signal radio ayant une fréquence dite « ultra-haute » comprise entre 850 et 950 MHz..

Selon le cas, l'invention peut comprendre l'une ou plusieurs des caractéristiques suivantes :

- l'organe d'indication de la position angulaire de l'aiguille est solidaire du cadran et/ou de l'aiguille.
- le dispositif comprend en outre au moins une mémoire reliée à l'organe de couplage électromagnétique et/ou à la logique électronique, ladite mémoire étant configurée pour stocker des données relatives au récipient de fluide pressurisé, en particulier le volume nominal, la pression nominale, la nature du ou des fluides admis, la date de ré-épreuve, au moins une règle de calcul d'une valeur de pression régnant à l'intérieur du récipient de fluide pressurisé à partir d'une position angulaire de l'aiguille, un historique des pressions mesurées correspondant aux positions angulaires de l'aiguille.
- l'organe de couplage électromagnétique comprend une antenne radiofréquence reliée à un circuit ou puce électronique.
- l'organe de couplage électromagnétique est alimenté électriquement par une boucle inductive agencée au sein dudit organe de couplage électromagnétique.
- l'organe d'indication de la position angulaire de l'aiguille comprend au moins une portion de l'aiguille formée d'un premier matériau conducteur électriquement et une zone de détection du cadran comprenant plusieurs parties formées d'un deuxième matériau conducteur électriquement, lesdites parties étant isolées électriquement entre elles.
- l'organe d'indication de la position angulaire de l'aiguille est configuré pour induire une variation de la capacité électrique entre chacune des parties et l'aiguille, selon la position angulaire de l'aiguille.
- les parties sont délimitées entre elles par des bordures s'étendant sensiblement radialement depuis l'axe transversal au cadran.
- les bordures des parties comprennent au moins une portion en forme de V et/ou au moins une portion de forme curviligne.
- l'organe d'indication de la position angulaire de l'aiguille comprend un organe magnétique solidaire de l'aiguille, tel un aimant permanent, et un capteur magnétique, tel un capteur d'angle magnétique.
- l'organe d'indication de la position angulaire de l'aiguille est configuré pour induire une variation de l'angle du champ magnétique au niveau de l'axe transversal selon la position angulaire de l'aiguille.
- l'organe d'indication de la position angulaire de l'aiguille comprend un système mécanique à engrenages couplé à l'aiguille, ledit système mécanique à engrenages comprenant au moins une pièce déplaçable dans plusieurs positions selon la position angulaire de l'aiguille, et un capteur de position de ladite au moins une pièce du système mécanique à engrenages.

En outre, l'invention concerne une installation de traitement de données relatives à un récipient de fluide pressurisé comprenant un dispositif de mesure de la pression selon l'une des revendications précédentes, ladite installation comprenant :

- un lecteur radiofréquence configuré pour alimenter électriquement la logique électronique et l'organe d'indication par envoi d'un premier signal radio vers l'organe de couplage électromagnétique et pour recevoir dudit organe de couplage électromagnétique un deuxième signal radio représentatif d'une valeur de pression régnant à l'intérieur du récipient de fluide pressurisé, et
- une unité électronique reliée électriquement audit lecteur radiofréquence, ladite unité électronique étant configurée pour traiter et/ou enregistrer ladite valeur de pression reçue par le lecteur radiofréquence, le premier signal radio et le deuxième signal radio ayant une fréquence dite « ultra-haute » comprise entre 850 et 950 MHz..

Selon un autre aspect, l'invention concerne également un procédé de mesure de la pression régnant à l'intérieur d'un récipient de fluide pressurisé, ledit procédé comprenant les étapes suivantes :

- agencer, solidairement audit récipient de fluide pressurisé, un dispositif de mesure de la pression régnant à l'intérieur dudit réservoir de fluide pressurisé, ledit dispositif comprenant un cadran comprenant un repère angulaire portant des indications représentatives de valeurs de pression, et une aiguille mobile en rotation autour d'un axe transversal au cadran, ladite aiguille pouvant occuper plusieurs positions angulaires en regard du repère angulaire selon la valeur de la pression régnant à l'intérieur du récipient de fluide pressurisé,

- indiquer au moins une position angulaire de l'aiguille,
- produire un signal électrique représentatif de la position angulaire de l'aiguille, et
- calculer une valeur de pression régnant à l'intérieur du récipient de fluide pressurisé à partir de ladite position angulaire de l'aiguille,

caractérisé en ce qu'il comprend les étapes suivantes :

- alimenter électriquement le dispositif de mesure de la pression régnant à l'intérieur dudit réservoir de fluide pressurisé par conversion d'un premier signal radio reçu par ledit dispositif, et
- transmettre à distance via un deuxième signal radio ledit signal électrique représentatif de la valeur de pression régnant à l'intérieur du récipient de fluide pressurisé,

le premier signal radio et le deuxième signal radio ayant une fréquence dite « ultra-haute » comprise entre 850 et 950 MHz.

Avantageusement, ledit procédé met en oeuvre un dispositif de mesure comprenant l'une ou plusieurs des caractéristiques précitées, considérées individuellement ou selon les combinaisons techniquement possibles.

L'invention va maintenant être mieux comprise grâce à la description détaillée suivante faite en référence aux Figures ci-annexées parmi lesquelles :

- les Figures 1 et 2 schématisent partiellement un mode de réalisation d'un dispositif et d'une installation selon l'invention,
- les Figures 3 et 4 schématisent partiellement un second mode de réalisation d'un dispositif et d'une installation selon l'invention, et
- les Figures 5 et 6 schématisent un troisième mode de réalisation d'un dispositif et d'une installation selon l'invention.

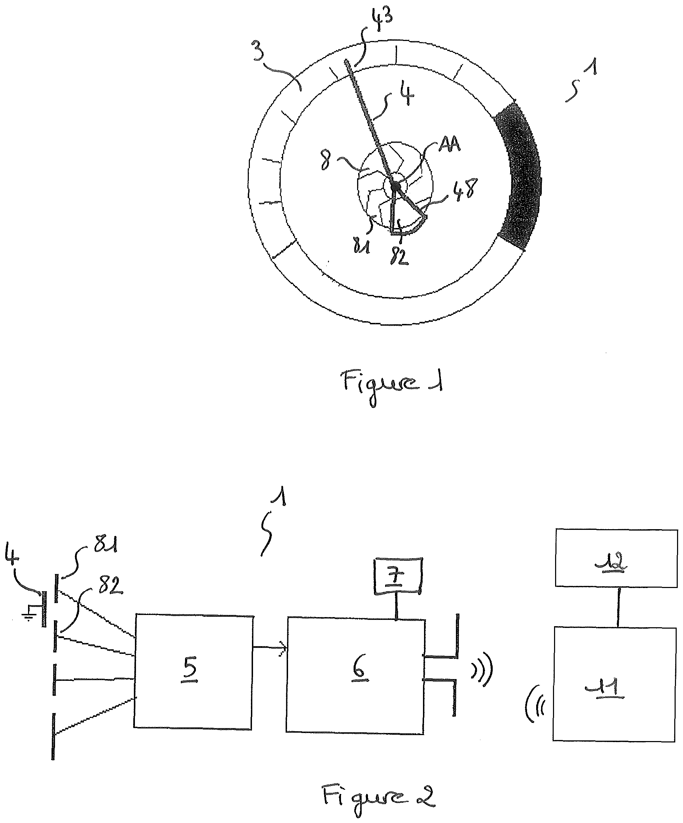

Comme on le voit sur la Figure 1, un dispositif 1 de mesure de pression de fluide selon l'invention comprend un cadran 2 comprenant un repère angulaire 3 portant des indications représentatives de valeurs de pression et s'étendant sur au moins une partie de la périphérie du cadran 2. Typiquement, ces indications peuvent comprendre des graduations auxquelles sont associées des valeurs numériques de pressions, par exemple des graduations placées à intervalles réguliers sur une plage de valeurs allant de 0 à 250 bar. Par « indication représentative de pression », on entend toute forme d'indication de laquelle peut être déduite la pression régnant dans le récipient, par exemple des indications symboliques ou des valeurs exprimées sous forme de fractions.

Le dispositif de l'invention comprend en outre une aiguille 4 agencée en regard du cadran 2 et mobile en rotation autour d'un axe transversal AA au cadran 2. Plus précisément, l'aiguille 4 peut occuper plusieurs positions angulaires en regard du repère angulaire 3 selon la valeur de la pression régnant à l'intérieur du récipient de fluide pressurisé. La lecture de la pression régnant dans le récipient de fluide peut ainsi se faire directement, généralement en évaluant visuellement la position d'une première extrémité 43 de l'aiguille 4 relativement aux indications du repère angulaire 3.

A noter que dans le cadre de l'invention, le fluide peut être un composé à l'état gazeux, liquide ou diphasique gaz-liquide, pur ou résultant d'un mélange de fluides de différente nature. De préférence, le récipient de fluide est une bouteille de gaz à robinet avec ou sans détendeur intégré, de type industriel ou médical, sur laquelle est monté le dispositif de l'invention. Optionnellement, le dispositif 1 peut être agencé sur une canalisation de fluide en communication fluidique avec le volume interne du récipient de fluide.

De préférence, le dispositif de mesure de pression 1 comprend un manomètre à tube de bourdon. De façon connue en soi, ce dispositif comprend un organe de mesure à tube déformable qui subit une modification de sa position en fonction de la pression, cette modification étant transmise à un système mécanique à engrenages relié à l'aiguille 4. Un tel dispositif est notamment décrit dans le document EP-A-0501186.

Selon l'invention, le dispositif de mesure 1 comprend en outre un organe d'indication 4, 8, 9, 10, 13, 14 de la position angulaire de l'aiguille 4. En fait, ledit organe d'indication est configuré pour indiquer la position angulaire de l'aiguille 4 en regard du cadran 2 en induisant une variation d'une grandeur physique au niveau dudit organe d'indication, selon la position angulaire occupée par l'aiguille 4.

Selon l'exemple de réalisation présenté en Figure 1, l'organe d'indication de la position angulaire de l'aiguille 4 comprend au moins une partie de l'aiguille 4 formée d'un premier matériau conducteur électriquement, de préférence un matériau métallique, et une zone de détection 8 du cadran 2 comprenant au moins une partie 81, 82 formée d'un deuxième matériau conducteur électriquement. Dans ce cas, la grandeur physique dont la variation est induite par l'organe d'indication selon la position angulaire de l'aiguille 4 est la capacité électrique des condensateurs formés respectivement entre les parties 81, 82 et l'aiguille 4.

Comme illustré en Figure 2, une logique électronique 5 est reliée électriquement à l'organe d'indication 4, 81, 82... La logique électronique 5 comprend un capteur de l'organe d'indication 4, 81, 82.... A noter que par «capteur de l'organe d'indication », on entend tout dispositif configuré pour mesurer la grandeur physique. La logique électronique 5 comprend en outre un circuit de mesure configuré pour produire un signal électrique représentatif de la position angulaire de l'aiguille 4 indiquée par l'organe d'indication, à partir de la valeur de la grandeur physique mesurée par le capteur de l'organe d'indication 4, 8, 9, 10, 13, 14, et pour calculer une valeur de pression régnant à l'intérieur du récipient de fluide pressurisé à partir de ladite position angulaire. De la sorte, le dispositif 1 produit un signal transmissible à distance et aisément exploitable dans un procédé automatique de suivi et de traçabilité du contenu du récipient de fluide.

Le circuit de mesure comprend avantageusement un microcontrôleur, ce type de dispositif offrant généralement de faibles consommations électriques, typiquement de 0,03 à 1 mW.

En fait, le circuit électronique de mesure de la logique électronique 5 permet d'acquérir et de traiter les mesures de la grandeur physique représentative de la position angulaire de l'aiguille 4 réalisées par le capteur de l'organe d'indication 4, 8 pour les convertir en angle formé par l'aiguille 4 en regard du cadran 2. En outre, la logique électronique 5 comprend préférentiellement un circuit électronique de traitement, confondu ou relié avec le circuit de mesure, permettant de traiter les valeurs d'angles calculées par le circuit électronique de mesure pour les convertir en valeur de pression régnant à l'intérieur du récipient de fluide.

Le dispositif de mesure 1 selon l'invention se distingue notamment des dispositifs de l'art antérieur en ce qu'il comprend un organe de couplage électromagnétique 6 relié électriquement à la logique électronique 5.

De façon connue en soi, le couplage électromagnétique permet une transmission sans fil à la fois d'informations et d'énergie électrique entre des organes émetteur et/ou récepteur d'ondes radio, sur des distances allant typiquement jusqu'à plusieurs mètres, ces distances variant selon la fréquence des ondes utilisées. Le couplage électromagnétique peut être réalisé avec une technologie du même type que celle utilisée dans les radio-étiquettes, également connues sous le nom de systèmes « *RFID* » (pour « *Radio-Frequency Identification* »), « *RFID-tags* » ou « *RFID-transponders* ». De tels systèmes sont notamment décrits dans le document US-A-2011/0152825.

L'organe de couplage électromagnétique 6 est ainsi configuré pour alimenter électriquement la logique électronique 5 et l'organe d'indication 4, 8, 9, 10, 13, 14 en convertissant un premier signal radio reçu par ledit organe de couplage électromagnétique 6, et pour transmettre via un deuxième signal radio ledit signal électrique représentatif de la position angulaire de l'aiguille 4. Pour ce faire, l'organe de couplage électromagnétique 6 comprend un port de réception dudit premier signal radio et un port d'émission dudit signal radio, étant entendu que les ports d'émission et de réception sont avantageusement confondus et que le premier signal radio et le deuxième signal radio sont avantageusement superposés temporellement, comme dans le cas d'un transpondeur de type RFID.

Comme schématisé sur la Figure 2, le premier signal radio est avantageusement émis par un lecteur radiofréquence 11 situé à distance de l'organe de couplage électromagnétique 6. Ce premier signal radio est ensuite converti en signal électrique par l'organe de couplage 6, ce qui permet de fournir l'énergie électrique nécessaire au fonctionnement de la logique électronique 5 et de l'organe d'indication 4, 8 de la position de l'aiguille 4. Plus précisément, l'organe de couplage électromagnétique 6 convertit au moins une partie de l'énergie du champ électromagnétique reçu en énergie électrique.

On comprend alors qu'un des avantages principaux de l'invention est de permettre de s'affranchir de source d'énergie électrique reliée au dispositif de mesure 1 monté sur le récipient de fluide, réduisant de ce fait son coût, ses besoins de maintenance et sa complexité. C'est le premier signal radio qui fournit au dispositif 1 l'énergie nécessaire à la prise de mesure et à la transmission à distance de l'information sur la pression dans le récipient de fluide.

On peut d'ailleurs ne fournir de l'énergie électrique à l'organe d'indication et à la logique électronique 5 qu'au moment auquel on souhaite obtenir une mesure de la position angulaire de l'aiguille 4. Il s'ensuit une réduction significative des coûts de fonctionnement du dispositif de l'invention.

Avantageusement, le dispositif 1 comprend une mémoire 7, par exemple de type EEPROM, FLASH ou FRAM, reliée à l'organe de couplage électromagnétique 6 et/ou à la logique électronique 5. Dans la mémoire 7 sont stockées des données relatives au récipient de fluide, ces données pouvant être transmises à distance par l'organe de couplage électromagnétique 6 par onde radio. Outre le suivi de la quantité de fluide résiduelle dans le récipient, il est alors possible d'automatiser l'identification du récipient, ce qui améliore sa traçabilité.

Les données stockées dans la mémoire 7 peuvent être choisies parmi : le volume nominal, la pression nominale, la nature du ou des fluides admis, la date de ré-épreuve du récipient de fluide. En outre, on peut stocker dans la mémoire 7 au moins une règle de calcul d'une valeur de pression régnant à l'intérieur du récipient de fluide pressurisé à partir d'une position angulaire de l'aiguille 4 et/ou un historique des pressions correspondant aux positions angulaires de l'aiguille 4. Ceci permet de rendre plus efficace le traitement des données relatives à la position de l'aiguille 4 par la logique électronique 5 et/ou de surveiller une éventuelle dérive de la règle de calcul de la pression.

Typiquement, la règle de calcul est une équation mathématique déterminant la pression en fonction de la position angulaire de l'aiguille et faisant intervenir plusieurs coefficients dont la valeur dépend de la construction et des caractéristiques du dispositif de mesure 1.

Avantageusement, la mémoire 7 contient également lesdits coefficients. Ainsi, en évaluant la position angulaire de l'aiguille 4 correspondant à au moins deux valeurs de pression régnant dans le récipient, par exemple 0 et 200 bar, la logique électronique 5 est capable, par interpolation, de déterminer les valeurs de pression correspondant à des positions angulaires intermédiaires. Le dispositif de mesure 1 peut ainsi s'auto calibrer.

Avantageusement, l'organe de couplage électromagnétique 6 comprend une antenne radiofréquence couplée à un circuit ou puce électronique, par exemple un circuit intégré. L'organe de couplage électromagnétique 6 est ainsi alimenté électriquement, via l'antenne radiofréquence, par le premier signal radio.

Dans le cadre de l'invention, l'organe de couplage électromagnétique 6 met en oeuvre un couplage de type électromagnétique selon lequel le premier signal radio et le deuxième signal radio ont une fréquence dite « ultra-haute » comprise entre 850 et 950 MHz. Avantageusement, le dispositif de mesure 1 fonctionne à des fréquences de l'ordre des valeurs normalisées de 868 ou 915 MHz.

L'utilisation d'un couplage électromagnétique à fréquence « ultra-haute » permet, par rapport à un couplage magnétique selon l'art antérieur, d'accroître significativement la distance de transmission des premier et deuxième signal radio, typiquement jusqu'à 10 m.

Ainsi, la puissance reçue $P_r$ par l'organe de couplage électromagnétique 6 s'exprime, en fonction de la puissance $P_e$ émise par l'organe émettant le premier signal radio, tel le lecteur radiofréquence 11 :

$$P_r = P_e + G_t + G_r + 20 \log_{10}[\lambda/(4\pi d)]$$

où $G_r$, $G_e$ sont les gains desdits organes, $\lambda$ la longueur d'onde du premier signal radio et d la distance entre l'organe de couplage électromagnétique 6 l'organe émettant le premier signal radio.

En supposant une puissance $P_e$ égale à 1 W, des gains $G_r$ et $G_e$ nuls, une distance d égale à 5 m et une fréquence de 868 MHz, la puissance $P_r$ est de l'ordre de 29 µW.

Le dispositif selon l'invention peut ainsi être alimenté et émettre à grande distance, tout en ne nécessitant qu'une faible puissance de fonctionnement.

Au contraire, un organe de couplage magnétique nécessite une puissance plus importante pour fonctionner, typiquement de quelques mW.

L'organe de couplage électromagnétique 6 comprend avantageusement un dipôle ou une antenne planaire, avantageusement fabriquée sous la forme d'un circuit imprimé. L'avantage du couplage électrique est de pouvoir être utilisé en champ lointain, la distance entre l'organe de couplage électromagnétique 6 et le lecteur 11 pouvant aller jusqu'à 4 mètres, voire 6 mètres environ. De même, le lecteur 11 comprend de préférence un dipôle ou une antenne planaire, avantageusement fabriquée sous la forme d'un circuit imprimé.

Le dipôle ou l'antenne planaire de l'organe de couplage électromagnétique 6 est en outre capable d'émettre le deuxième signal radio.

Selon un mode particulièrement avantageux de réalisation de l'invention, illustré sur les Figures 1 et 2, l'organe d'indication de la position angulaire de l'aiguille

4 comprend au moins une portion de l'aiguille 4 formée d'un premier matériau conducteur électriquement et une zone de détection 8 du cadran 2 comprenant plusieurs parties 81, 82,... formée d'un deuxième matériau conducteur électriquement et isolées électriquement entre elles. L'utilisation de plusieurs parties discrètes offre l'avantage de pouvoir s'affranchir des variations de température au niveau du dispositif de mesure 1.

A noter que dans le cadre de la présente invention, on entend par matériau conducteur électriquement un matériau contenant de nombreux porteurs de charge électrique pouvant se déplacer facilement sous l'action d'un champ électromagnétique. A l'inverse, un matériau électriquement isolant, ou matériau diélectrique, est un matériau qui ne conduit pas l'électricité, c'est-à-dire qui interdit le passage de courant électrique entre deux éléments conducteurs.

Dans ce mode de réalisation, l'organe d'indication 4, 8 induit une variation de la capacité électrique au niveau d'au moins une partie 81, 82,... de la zone de détection 8, l'aiguille 4 et les parties 81, 82,... formant un ensemble de condensateurs. La capacité électrique du condensateur formé entre l'aiguille 4 et une partie 81, 82 dépendant des surfaces d'aiguille 4 et de partie 81, 82 agencées en regard l'une de l'autre, il est possible d'en déduire la position angulaire de l'aiguille 4 en regard du cadran 2.

En fait, chaque partie 81, 82,... présente une valeur de capacité électrique différente et variant selon la position angulaire de l'aiguille 4. Grâce à un traitement par la logique électronique 5 des valeurs de capacités mesurées pour chaque partie 81, 82,..., il est possible de localiser l'aiguille 4 et d'en déduire la pression régnant dans le récipient de fluide. La logique électronique 5 est configurée pour produire un signal électrique représentatif de la position angulaire de l'aiguille 4 à partir de la capacité électrique. Une valeur de pression est ensuite calculée, de préférence à partir d'une règle de calcul stockée dans le dispositif 1.

Il s'ensuit un avantage en termes de consommation électrique du dispositif 1, la mesure d'une ou plusieurs capacités électriques, généralement de l'ordre du picofarad (pF), ne nécessitant d'alimenter la logique électronique 5 qu'avec un courant de faible intensité, typiquement quelques microampères (µA). Il s'ensuit des consommations énergétiques grandement réduites, de l'ordre de 30 microwatts (µW) au plus.

De préférence, l'aiguille 4 et la zone de détection 8 sont formées en tout ou partie d'un matériau métallique, par exemple de l'aluminium ou du cuivre, éventuellement revêtu de peinture pour une meilleure visibilité de l'aiguille 4. L'utilisation d'aluminium est particulièrement avantageuse du fait de son faible poids et de son coût raisonnable.

La précision sur la localisation de l'aiguille 4 augmente avec le nombre de parties 81, 82... de la zone de détection 8. Ainsi, le nombre de parties est avantageusement compris entre 4 et 32, ce qui permet d'obtenir une précision de mesure satisfaisante sans complexification excessive du dispositif. Pour un récipient de fluide d'une pression nominale de l'ordre de 250 bar, on peut ainsi obtenir une précision de mesure de l'ordre de quelques bar.

Avantageusement, l'aiguille 4 comprend une première extrémité 43 agencée en regard du repère angulaire 3 du cadran 2 et une deuxième extrémité 48 agencée en regard de la zone de détection 8 du cadran 2. En fait, les première et deuxième extrémités 43, 48 de l'aiguille 4 sont agencées de part et d'autre de l'axe AA du cadran 2, la deuxième extrémité 48 étant de préférence de section plus large que celle de la première extrémité 43. Cette portion élargie de l'aiguille 4 permet d'induire une variation plus significative de la capacité électrique au niveau de la zone de détection 8.

Comme montré sur la Figure 1, les parties 81, 82...sont délimitées entre elles par des bordures s'étendant sensiblement radialement depuis l'axe AA transversal au cadran 2.

Selon le cas, les bordures des parties 81, 82,... peuvent être rectilignes, ou comprendre au moins une portion en forme de V, comme schématisé sur la Figure 1.

Une telle forme en V favorise la progressivité de la variation de la capacité électrique lors d'une rotation de l'aiguille 4 en regard des parties 81, 82,..., ce qui améliore la précision sur la mesure de la position angulaire de l'aiguille, et de ce fait la précision sur la mesure de pression. En fait, lorsque l'aiguille 4 se trouve à la fois en regard d'une partie 81 et d'une autre partie 82 contigüe, du fait du profil en V des bordures, la logique électronique 5 détermine par interpolation la position angulaire de l'aiguille 4 à partir de la mesure des capacités électriques de deux parties contigües. On atteint ainsi une précision de mesure inférieure à l'étendue angulaire des parties 81, 82...

De manière générale, les bordures des parties 81, 82,... ont donc avantageusement toute forme non rectiligne permettant une variation progressive des capacités électriques lors du passage de l'aiguille 4 en regard d'une bordure à une bordure adjacente, par exemple au moins une portion de forme curviligne.

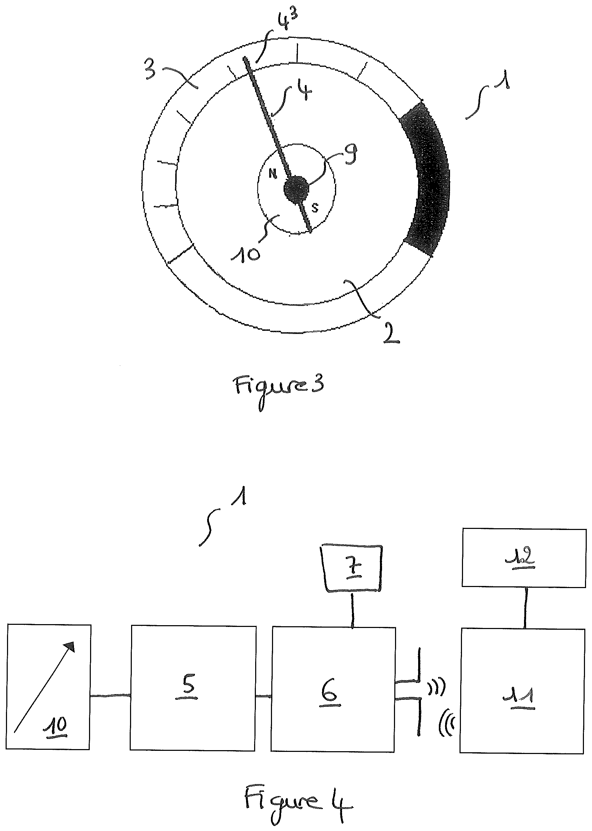

Selon une variante de réalisation de l'invention, illustrée sur les Figures 3 et 4, l'organe d'indication de la position angulaire de l'aiguille 4 comprend un organe magnétique 9 solidaire de l'aiguille 4, tel un aimant permanent, et un capteur magnétique 10, de préférence un capteur d'angle magnétique, configuré pour indiquer l'angle formé entre l'organe magnétique 9 et le capteur d'angle magnétique 10.

De préférence, l'organe magnétique 9 et le capteur magnétique 10 sont agencés au niveau de l'axe transversal AA au cadran 2.

Dans ce mode de réalisation, la grandeur physique dont une variation est induite par une variation de la position angulaire de l'aiguille 4 est l'angle du champ magnétique induit au niveau de l'axe AA. Le capteur magnétique 10 peut être un capteur du type Hall, c'est-à-dire fonctionnant sur le principe de la détection de l'effet Hall. Le capteur Hall peut être par exemple un capteur Hall de type CMOS.

La logique électronique 5 est configurée pour produire un signal électrique représentatif de la position angulaire de l'aiguille 4 à partir de la position angulaire indiquée pour l'organe magnétique 9 et le capteur magnétique 10. Une valeur de pression est ensuite calculée, de préférence à partir d'une règle de calcul de la pression stockée dans le dispositif de mesure 1.

Ce mode de réalisation offre une consommation électrique faible et une bonne précision de mesure tout en étant de mise en oeuvre simple.

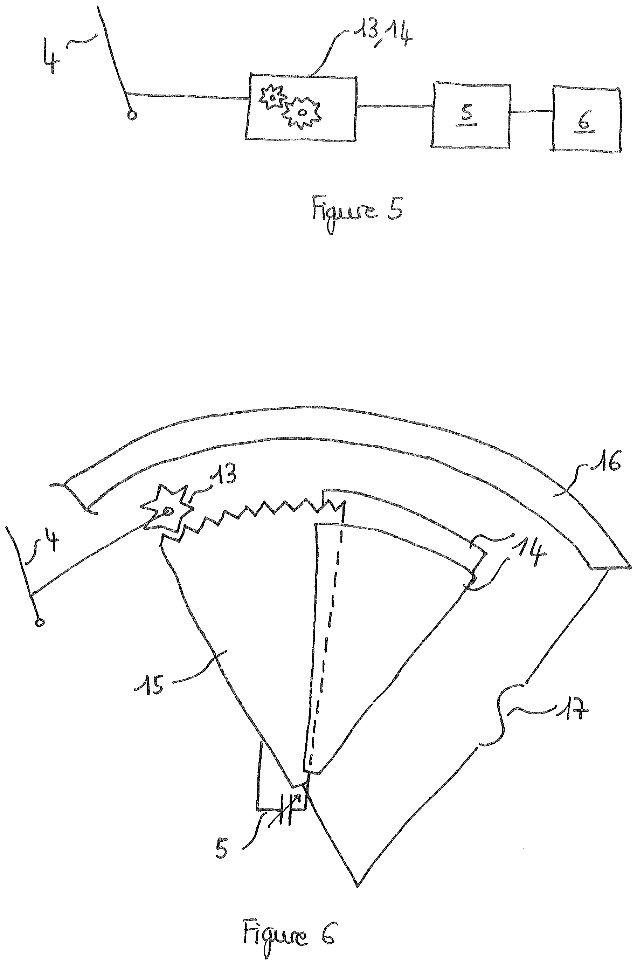

Selon une autre variante de réalisation, illustrée en Figure 5, l'organe d'indication 13, 14, de la position angulaire de l'aiguille 4 comprend un système mécanique à engrenages 13 couplé à l'aiguille 4, ledit système mécanique à engrenages 13 comprenant au moins une pièce déplaçable dans plusieurs positions selon la position angulaire de l'aiguille 4, et un capteur de position 14 de ladite au moins une pièce du système mécanique à engrenages 13.

En fait, selon cette variante, le dispositif 1 de mesure est avantageusement un manomètre à tube de bourdon 16. Sous l'effet d'une variation de la pression régnant dans le récipient de fluide, le tube 16 se déforme et cette modification est transmise, via une liaison métallique 17, au système mécanique à engrenages 13, qui entraîne l'aiguille 4 et la déplace en rotation en regard du repère angulaire 3. En mesurant la position du système à engrenages 13, il est donc possible d'en déduire la position angulaire de l'aiguille 4, et de là la pression régnant dans le réservoir.

Selon un mode de réalisation particulier, illustré en Figure 6, le système mécanique d'engrenages 13 comprend au moins une roue 13 couplée à l'aiguille 4 et conformée pour engrener une crémaillère 15. Au moins une portion de ladite crémaillère 15 est susceptible de se déplacer en rotation en regard d'au moins un élément conducteur électrique 14 lors d'une variation de la pression régnant dans le récipient de fluide, la crémaillère 15 étant elle aussi formée d'un matériau conducteur électriquement. La crémaillère 15 et le au moins un élément 14 forme ainsi les bornes d'un condensateur dont la capacité électrique est proportionnelle à la surface de la crémaillère 15 se trouvant en regard de l'élément 14. L'organe d'indication 13, 14 de la position angulaire de l'aiguille 4 est ainsi configuré pour induire une variation de la capacité électrique selon la position angulaire occupée par l'aiguille 4, la logique électronique 5 pouvant mesurer cette capacité électrique et générer un signal électrique représentatif de la position de l'aiguille 4 à partir de cette mesure.

Avantageusement, on agence deux éléments 14 isolés électriquement entre eux, de préférence deux plaques 14, de part et d'autre de la crémaillère 15, la crémaillère 15 pouvant se déplacer en rotation entre les deux éléments 14 et parallèlement à ceux-ci. La logique électronique 5 mesure alors la capacité électrique entre la crémaillère 15 et chacun des éléments 14. On s'affranchit ainsi d'une éventuelle erreur de parallélisme entre la crémaillère 15 et un élément 14, qui pourrait entraîner une variation de la capacité non proportionnelle aux surfaces en regard dans le cas où un seul élément 14 serait utilisé. En effet, la capacité électrique dépend non seulement des surfaces en regard, mais aussi de la distance séparant lesdites surfaces.

L'invention concerne également une installation de traitement des données relatives à un récipient de fluide pressurisé comprenant un dispositif 1 de mesure et un lecteur radiofréquence 11. Comme on le voit sur les Figures 2 et 4, l'installation comprend en outre une unité électronique 12 reliée électriquement audit lecteur radiofréquence 11. L'unité électronique 12 comprend de préférence un microcontrôleur.

Selon l'invention, le lecteur radiofréquence 11 est configuré pour alimenter électriquement la logique électronique 5 et l'organe d'indication par envoi d'un premier signal radio vers l'organe de couplage électromagnétique 6. De préférence, le lecteur radiofréquence 11 comprend un autre organe de couplage électromagnétique pouvant coopérer par émission d'un premier signal radio et réception d'un deuxième signal radio avec l'organe de couplage électromagnétique 6 du dispositif de mesure 1. L'unité électronique 12 est configurée pour traiter et/ou enregistrer la valeur de pression reçue de l'organe de couplage électromagnétique 6 par le lecteur 11.

**Revendications**

1. Dispositif (1) de mesure de la pression régnant à l'intérieur d'un récipient de fluide pressurisé, ledit dispositif (1) comprenant :

    - un cadran (2) comprenant un repère angulaire (3) portant des indications représentatives de valeurs de pression,
    - une aiguille (4) mobile en rotation autour d'un axe transversal (AA) au cadran (2), ladite aiguille (4) pouvant occuper plusieurs positions angulaires en regard du repère angulaire (3) selon la valeur de la pression régnant à l'intérieur du récipient de fluide pressurisé,
    - un organe d'indication (4, 8, 9, 10, 13, 14) de la position angulaire de l'aiguille (4), et
    - une logique électronique (5) reliée électriquement à l'organe d'indication (4, 8, 9, 10, 13, 14) de la position angulaire de l'aiguille (4), ladite logique électronique (5) comprenant un capteur dudit organe d'indication (4, 8, 9, 10, 13, 14) et un circuit de mesure relié audit capteur dudit organe d'indication (4, 8, 9, 10, 13, 14), ledit circuit de mesure étant configuré pour produire un signal électrique représentatif de la position angulaire de l'aiguille (4) indiquée par l'organe d'indication et calculer une valeur de pression régnant à l'intérieur du récipient de fluide pressurisé à partir de ladite position angulaire de l'aiguille (4),

**caractérisé en ce qu'**il comprend en outre :

    - un organe de couplage électromagnétique (6) relié électriquement à la logique électronique (5), ledit organe de couplage électromagnétique (6) étant configuré pour alimenter électriquement la logique électronique (5) et l'organe d'indication (4, 8, 9, 10, 13, 14) en convertissant un premier signal radio reçu par ledit organe de couplage électromagnétique (6), l'organe de couplage électromagnétique (6) étant également configuré pour transmettre à distance via un deuxième signal radio la valeur de pression régnant à l'intérieur du récipient de fluide pressurisé, le premier signal radio et le deuxième signal radio ayant une fréquence dite « ultra-haute » comprise entre 850 et 950 MHz.

2. Dispositif selon la revendication 1, **caractérisé en ce que** l'organe d'indication (4, 8, 9, 10, 13, 14) de la position angulaire de l'aiguille (4) est solidaire du cadran (2) et/ou de l'aiguille (4).

3. Dispositif selon l'une des revendications 1 ou 2, **caractérisé en ce qu'**il comprend en outre au moins une mémoire (7) reliée à l'organe de couplage électromagnétique (6) et/ou à la logique électronique (5), ladite mémoire (7) étant configurée pour stocker des données relatives au récipient de fluide pressurisé, en particulier le volume nominal, la pression nominale, la nature du ou des fluides admis, la date de ré-épreuve, au moins une règle de calcul d'une valeur de pression régnant à l'intérieur du récipient de fluide pressurisé à partir d'une position angulaire de l'aiguille (4), un historique des pressions mesurées correspondant aux positions angulaires de l'aiguille (4).

4. Dispositif selon l'une des revendications précédentes, **caractérisé en ce que** l'organe de couplage électromagnétique (6) comprend une antenne radiofréquence reliée à un circuit ou puce électronique.

5. Dispositif selon l'une des revendications précédentes, **caractérisé en ce que** l'organe de couplage électromagnétique (6) est alimenté électriquement par une boucle inductive agencée au sein dudit organe de couplage électromagnétique (6).

6. Dispositif selon l'une des revendications précédentes, **caractérisé en ce que** l'organe d'indication (4, 8, 9, 10, 13, 14) de la position angulaire de l'aiguille

(4) comprend au moins une portion de l'aiguille (4) formée d'un premier matériau conducteur électriquement et une zone de détection (8) du cadran (2) comprenant plusieurs parties (81, 82, ...) formées d'un deuxième matériau conducteur électriquement, lesdites parties (81, 82,...) étant isolées électriquement entre elles.

**7.** Dispositif selon la revendication 6, **caractérisé en ce que** l'organe d'indication (4, 8, 9, 10, 13, 14) de la position angulaire de l'aiguille (4) est configuré pour induire une variation de la capacité électrique entre chacune des parties (81, 82, ...) et l'aiguille (4), selon la position angulaire de l'aiguille (4).

**8.** Dispositif selon l'une des revendications 6 ou 7, **caractérisé en ce que** les parties (81, 82,...) sont délimitées entre elles par des bordures s'étendant sensiblement radialement depuis l'axe (AA) transversal au cadran (2).

**9.** Dispositif selon la revendication 8, **caractérisé en ce que** les bordures des parties (81, 82, 83...) comprennent au moins une portion en forme de V et/ou au moins une portion de forme curviligne.

**10.** Dispositif selon l'une des revendications 1 à 5, **caractérisé en ce que** l'organe d'indication (4, 8, 9, 10, 13, 14) de la position angulaire de l'aiguille (4) comprend un organe magnétique (9) solidaire de l'aiguille (4), tel un aimant permanent, et un capteur magnétique (10), tel un capteur d'angle magnétique.

**11.** Dispositif selon la revendication 10, **caractérisé en ce que** l'organe d'indication (4, 8, 9, 10, 13, 14) de la position angulaire de l'aiguille (4) est configuré pour induire une variation de l'angle du champ magnétique au niveau de l'axe (AA) selon la position angulaire de l'aiguille (4).

**12.** Dispositif selon l'une des revendications 1 à 5, **caractérisé en ce que** l'organe d'indication (4, 8, 9, 10, 13, 14) de la position angulaire de l'aiguille (4) comprend un système mécanique à engrenages (13) couplé à l'aiguille (4), ledit système mécanique à engrenages (13) comprenant au moins une pièce déplaçable dans plusieurs positions selon la position angulaire de l'aiguille (4), et un capteur de position (14) de ladite au moins une pièce du système mécanique à engrenages (13).

**13.** Installation de traitement de données relatives à un récipient de fluide pressurisé comprenant un dispositif (1) de mesure de la pression selon l'une des revendications précédentes, ladite installation comprenant :

- un lecteur radiofréquence (11) configuré pour alimenter électriquement la logique électronique (5) et l'organe d'indication par envoi d'un premier signal radio vers l'organe de couplage électromagnétique (6) et pour recevoir dudit organe de couplage électromagnétique (6) un deuxième signal radio représentatif d'une valeur de pression régnant à l'intérieur du récipient de fluide pressurisé, et
- une unité électronique (12) reliée électriquement audit lecteur radiofréquence (11), ladite unité électronique (12) étant configurée pour traiter et/ou enregistrer ladite valeur de pression reçue par le lecteur radiofréquence (11),

le premier signal radio et le deuxième signal radio ayant une fréquence dite « ultra-haute » comprise entre 850 et 950 MHz.

**14.** Procédé de mesure de la pression régnant à l'intérieur d'un récipient de fluide pressurisé, ledit procédé comprenant les étapes suivantes :

- agencer, solidairement audit récipient de fluide pressurisé, un dispositif (1) de mesure de la pression régnant à l'intérieur dudit réservoir de fluide pressurisé, ledit dispositif comprenant un cadran (2) comprenant un repère angulaire (3) portant des indications représentatives de valeurs de pression, et une aiguille (4) mobile en rotation autour d'un axe transversal (AA) au cadran (2), ladite aiguille (4) pouvant occuper plusieurs positions angulaires en regard du repère angulaire (3) selon la valeur de la pression régnant à l'intérieur du récipient de fluide pressurisé,
- indiquer au moins une position angulaire de l'aiguille (4),
- produire un signal électrique représentatif de la position angulaire de l'aiguille (4), et
- calculer une valeur de pression régnant à l'intérieur du récipient de fluide pressurisé à partir de ladite position angulaire de l'aiguille (4),

**caractérisé en ce qu'**il comprend les étapes suivantes :

- alimenter électriquement le dispositif (1) de mesure de la pression régnant à l'intérieur dudit réservoir de fluide pressurisé par conversion d'un premier signal radio reçu par ledit dispositif (1), et
- transmettre à distance via un deuxième signal radio ledit signal électrique représentatif de la valeur de pression régnant à l'intérieur du récipient de fluide pressurisé,

le premier signal radio et le deuxième signal radio ayant une fréquence dite « ultra-haute » comprise entre 850 et 950 MHz.

**Patentansprüche**

1. Vorrichtung (1) zum Messen des Drucks, der im Inneren eines unter Druck stehenden Fluidbehälters herrscht, wobei die Vorrichtung (1) umfasst:

   - ein Ziffernblatt (2), umfassend eine Winkelmarkierung (3), die für Druckwerte repräsentative Kennzeichnungen trägt,
   - einen um eine Querachse (AA) des Ziffernblatts (2) drehbaren Zeiger (4), wobei der Zeiger (4) gemäß dem im Inneren des unter Druck stehenden Fluidbehälters herrschenden Drucks hinsichtlich der Winkelmarkierung (3) mehrere Winkelpositionen einnehmen kann,
   - ein Kennzeichnungsorgan (4, 8, 9, 10, 13, 14) der Winkelposition des Zeigers (4), und
   - eine elektronische Logik (5), elektrisch mit dem Kennzeichnungsorgan (4, 8, 9, 10, 13, 14) der Winkelposition des Zeigers (4) verbunden, wobei die elektronische Logik (5) einen Sensor des Kennzeichnungsorgans (4, 8, 9, 10, 13, 14) und eine mit dem Sensor des Kennzeichnungsorgans (4, 8, 9, 10, 13, 14) verbundene Messschaltung umfasst, wobei die Messschaltung konfiguriert ist, um ein elektrisches Signal zu produzieren, das repräsentativ ist für die Winkelposition des durch das Kennzeichnungsorgan angezeigten Zeigers (4), und ausgehend von der Winkelposition des Zeigers (4) einen Druckwert zu berechnen, der im Inneren des unter Druck stehenden Fluidbehälters herrscht,

   **dadurch gekennzeichnet, dass** sie weiter umfasst:

   - ein elektrisch mit der elektronischen Logik (5) verbundenes elektromagnetisches Kupplungsorgan (6), wobei das elektromagnetische Kupplungsorgan (6) konfiguriert ist, um die elektronische Logik (5) und das Kennzeichnungsorgan (4, 8, 9, 10, 13, 14) durch Umwandeln eines ersten durch das elektromagnetische Kupplungsorgan (6) empfangenen Funksignals elektrisch zu versorgen, wobei das elektromagnetische Kupplungsorgan (6) ebenfalls konfiguriert ist, um über ein zweites Funksignal den Druckwert, der im Inneren des unter Druck stehenden Fluidbehälters herrscht, über eine Distanz zu übertragen, wobei das erste Funksignal und das zweite Funksignal eine "ultrahoch" genannte Frequenz zwischen 850 und 950 MHz umfassen.

2. Vorrichtung nach Anspruch 1, **dadurch gekennzeichnet, dass** das Kennzeichnungsorgan (4, 8, 9, 10, 13, 14) der Winkelposition des Zeigers (4) mit dem Ziffernblatt (2) und/oder dem Zeiger (4) fest verbunden ist.

3. Vorrichtung nach einem der Ansprüche 1 oder 2, **dadurch gekennzeichnet, dass** sie weiter mindestens einen mit dem elektromagnetischen Kupplungsorgan (6) und/oder der elektronischen Logik (5) verbundenen Speicher (7) umfasst, wobei der Speicher (7) konfiguriert ist, um Daten betreffend den unter Druck stehenden Fluidbehälter zu speichern, insbesondere das Nominalvolumen, den Nominaldruck, die Art des oder der aufgenommenen Fluide, das Datum der erneuten Prüfung, mindestens eine Berechnungsregel eines im Inneren des unter Druck stehenden Fluidbehälters herrschenden Drucks, ausgehend von einer Winkelposition des Zeigers (4), eine Historie der gemessenen Drücke, entsprechend den Winkelpositionen des Zeigers (4).

4. Vorrichtung nach einem der vorstehenden Ansprüche, **dadurch gekennzeichnet, dass** das elektromagnetische Kupplungsorgan (6) eine mit einer elektronischen Schaltung oder einem elektronischen Chip verbundene Funkfrequenzantenne umfasst.

5. Vorrichtung nach einem der vorstehenden Ansprüche, **dadurch gekennzeichnet, dass** das elektromagnetische Kupplungsorgan (6) durch eine in dem elektromagnetischen Kupplungsorgan (6) angeordneten Induktionsschleife elektrisch versorgt wird.

6. Vorrichtung nach einem der vorstehenden Ansprüche, **dadurch gekennzeichnet, dass** das Kennzeichnungsorgan (4, 8, 9, 10, 13, 14) der Winkelposition des Zeigers (4) mindestens einen aus einem ersten elektrisch leitenden Material gebildeten Abschnitt des Zeigers (4) und eine Erfassungszone (8) des Ziffernblatts (2), umfassend mehrere aus einem zweiten elektrisch leitenden Material gebildete Bestandteile (81, 82, ...), umfasst, wobei die Bestandteile (81, 82 ...) elektrisch voneinander isoliert sind.

7. Vorrichtung nach Anspruch 6, **dadurch gekennzeichnet, dass** das Kennzeichnungsorgan (4, 8, 9, 10, 13, 14) der Winkelposition des Zeigers (4) konfiguriert ist, um eine Variation der elektrischen Kapazität zwischen jedem der Bestandteile (81, 82, ...) und dem Zeiger (4), je nach der Winkelposition des Zeigers (4), zu induzieren.

8. Vorrichtung nach einem der Ansprüche 6 oder 7, **dadurch gekennzeichnet, dass** die Bestandteile (81, 82, ...) untereinander durch sich im Wesentlichen ab der Achse (AA) transversal zum Ziffernblatt (2) radial erstreckende Ränder abgegrenzt sind.

9. Vorrichtung nach Anspruch 8, **dadurch gekennzeichnet, dass** die Ränder der Bestandteile (81, 82, 83...) mindestens einen Abschnitt in V-Form und/oder mindestens einen krummlinigen Abschnitt umfassen.

10. Vorrichtung nach einem der Ansprüche 1 bis 5, **dadurch gekennzeichnet, dass** das Kennzeichnungsorgan (4, 8, 9, 10, 13, 14) der Winkelposition des Zeigers (4) ein mit dem Zeiger (4) einstückiges Magnetorgan (9), wie einen Permanentmagneten, und einen magnetischen Sensor (10), wie einen magnetischen Winkelsensor, umfasst.

11. Vorrichtung nach Anspruch 10, **dadurch gekennzeichnet, dass** das Kennzeichnungsorgan (4, 8, 9, 10, 13, 14) der Winkelposition des Zeigers (4) konfiguriert ist, um eine Variation des Winkels des Magnetfelds auf Höhe der Achse (AA), je nach der Winkelposition des Zeigers (4), zu induzieren.

12. Vorrichtung nach einem der Ansprüche 1 bis 5, **dadurch gekennzeichnet, dass** das Kennzeichnungsorgan (4, 8, 9, 10, 13, 14) der Winkelposition des Zeigers (4) ein mit dem Zeiger (4) gekoppeltes mechanisches Getriebesystem (13) umfasst, wobei das mechanische Getriebesystem (13) mindestens ein in mehrere Positionen, je nach der Position des Zeigers (4), verschiebbares Stück umfasst, und einen Positionssensor (14) des mindestens einen Stücks des mechanischen Getriebesystems (13).

13. Datenbehandlungsinstallation, betreffend einen unter Druck stehenden Fluidbehälter, umfassend eine Druckmessvorrichtung (1) nach einem der vorstehenden Ansprüche, wobei die Installation umfasst:

- ein Radiofrequenzlesegerät (11), konfiguriert zum elektrischen Einspeisen der elektronischen Logik (5) und des Kennzeichnungsorgans durch Senden eines ersten Funksignals zum elektromagnetischen Kupplungsorgan (6) und zum Empfangen eines zweiten Funksignals, repräsentativ für einen im Inneren des unter Druck stehenden Fluidbehälters herrschenden Druckwert, vom elektromagnetischen Kupplungsorgan (6), und
- eine elektrisch mit dem Radiofrequenzlesegerät verbundene elektronische Einheit (12), wobei die elektronische Einheit (12) konfiguriert ist, um den von dem Radiofrequenzlesegerät (11) empfangenen Druckwert zu behandeln und/oder aufzuzeichnen,

wobei das erste Funksignal und das zweite Funksignal eine "ultrahohe" Frequenz im Bereich von 850 und 950 MHz umfassen.

14. Messverfahren des Drucks, der im Inneren eines unter Druck stehenden Fluidbehälters herrscht, wobei das Verfahren die folgenden Schritte umfasst:

- mit dem unter Druck stehenden Fluidbehälter einstückiges Anordnen einer Messvorrichtung (1) des Drucks, der im Inneren des unter Druck stehenden Fluidbehälters herrscht, wobei die Vorrichtung ein Ziffernblatt (2), umfassend eine Winkelmarkierung (3), die für Druckwerte repräsentative Kennzeichnungen trägt, und einen drehbar um eine transversale Achse (AA) des Ziffernblatts (2) beweglichen Zeiger (4), wobei der Zeiger (4) gemäß dem im Inneren des unter Druck stehenden Fluidbehälters herrschenden Druck hinsichtlich der Winkelmarkierung (3) mehrere Winkelpositionen einnehmen kann,
- Anzeigen mindestens einer Winkelposition des Zeigers (4),
- Produzieren eines elektrischen Signals, repräsentativ für die Winkelposition des Zeigers (4), und
- Berechnen eines im Inneren des unter Druck stehenden Fluidbehälters herrschenden Druckwerts ausgehend von der Winkelposition des Zeigers (4),

**dadurch gekennzeichnet, dass** es die folgenden Schritte umfasst:

- elektrisches Einspeisen der Messvorrichtung (1) des Drucks, der im Inneren des unter Druck stehenden Fluidbehälter herrscht, durch Umwandeln eines ersten durch die Vorrichtung (1) empfangenen Funksignals, und
- Übertragen des elektrischen Signals durch ein zweites Funksignal, das für den Druckwert, der im Inneren des unter Druck stehenden Fluidbehälter herrscht, repräsentativen ist, über eine Distanz,

wobei das erste Funksignal und das zweite Funksignal eine "ultrahohe" Frequenz im Bereich von 850 und 950 MHz umfassen.

## Claims

1. Device (1) for measuring the pressure prevailing inside a pressurised fluid container, said device (1) comprising:

- a dial (2) comprising an angular index (3) bearing information representing pressure values,
- a needle (4) able to rotate about an axis (AA) transverse to the dial (2), said needle (4) being able to occupy a plurality of angular positions with regard to the angular index (3) according to the value of the pressure prevailing inside the pressurised fluid receptacle,
- a member (4, 8, 9, 10, 13, 14) indicating the angular position of the needle (4), and
- an electronic logic (5) electrically connected to the member (4, 8, 9, 10, 13, 14) indicating the angular position of the needle (4), said electronic logic (5) comprising a sensor for said indicating member (4, 8, 9, 10, 13, 14) and a measuring circuit connected to said sensor of said indicating member (4, 8, 9, 10, 13, 14), said measuring circuit being configured to produce an electrical signal representing the angular position of the needle (4) indicated by the indicating member and calculate a pressure value prevailing inside the pressurised fluid container from said angular position of the needle (4),

**characterised in that** it further comprises:

- an electromagnetic coupling member (6) electrically connected to the electronic logic (5), said electromagnetic coupling member (6) being configured to electrically supply the electronic logic (5) and the indicating member (4, 8, 9, 10, 13, 14) by converting a first radio signal received by said electromagnetic coupling member (6), the electromagnetic coupling member (6) also being configured to remotely transmit, via a second radio signal, the pressure value prevailing inside the pressurised fluid container, the first radio signal and the second radio signal having a so-called "ultra-high" frequency lying between 850 and 950 MHz.

2. Device according to claim 1, **characterised in that** the member (4, 8, 9, 10, 13, 14) indicating the angular position of the needle (4) is secured to the dial (2) and/or the needle (4).

3. Device according to either claim 1 or claim 2, **characterised in that** it further comprises at least one memory (7) connected to the electromagnetic coupling member (6) and/or to the electronic logic (5), said memory (7) being configured to store data relating to the pressurised fluid container, in particular the nominal volume, the nominal pressure, the nature of the fluid or fluids admitted, the date of retesting, at least one rule for calculating a pressure value prevailing inside the pressurised fluid container from an angular position of the needle (4), and a history of measured pressures corresponding to the angular positions of the needle (4).

4. Device according to any of the preceding claims, **characterised in that** the electromagnetic coupling member (6) comprises a radio-frequency antenna connected to an electronic circuit or chip.

5. Device according to any of the preceding claims, **characterised in that** the electromagnetic coupling member (6) is electrically supplied by an inductive loop arranged within said electromagnetic coupling member (6).

6. Device according to any of the preceding claims, **characterised in that** the member (4, 8, 9, 10, 13, 14) indicating the angular position of the needle (4) comprises at least one portion of the needle (4) formed by a first electrically-conductive material and a detection zone (8) of the dial (2) comprising a plurality of parts (81, 82, ...) formed by a second electrically-conductive material, said parts (81, 82, ...) being electrically insulated from each other.

7. Device according to claim 6, **characterised in that** the member (4, 8, 9, 10, 13, 14) indicating the angular position of the needle (4) is configured to induce a variation in the electrical capacitance between each of the parts (81, 82, ...) and the needle (4), depending on the angular position of the needle (4).

8. Device according to either claim 6 or claim 7, **characterised in that** the parts (81, 82, ...) are delimited from each other by boundaries extending substantially radially from the axis (AA) transverse to the dial (2).

9. Device according to claim 8, **characterised in that** the boundaries of the parts (81, 82, 83, ...) comprise at least one V-shaped portion and/or at least one curvilinear-shaped portion.

10. Device according to any of claims 1 to 5, **characterised in that** the member (4, 8, 9, 10, 13, 14) indicating the angular position of the needle (4) comprises a magnetic member (9) secured to the needle (4), such as a permanent magnet, and a magnetic sensor (10) such as a magnetic angle sensor.

11. Device according to claim 10, **characterised in that** the member (4, 8, 9, 10, 13, 14) indicating the angular position of the needle (4) is configured to cause a variation in the angle of the magnetic field at the axis (AA) depending on the angular position of the needle (4).

12. Device according to any of claims 1 to 5, **characterised in that** the member (4, 8, 9, 10, 13, 14) indicating the angular position of the needle (4) comprises a mechanical gear system (13) coupled to the needle (4), said mechanical gear system (13) comprising at least one part able to be moved in a plurality of positions according to the angular position of the needle (4), and a sensor (14) sensing the position of said at least one part of the mechanical meshing system (13).

**13.** Installation for processing data relating to a pressurized fluid container comprising a device (1) for measuring the pressure according to any of the preceding claims, said installation comprising:

- a radio-frequency reader (11) configured to electrically supply the electronic logic (5) and the indicating member by sending a first radio signal to the electromagnetic coupling member (6) and to receive from said electromagnetic coupling member (6) a second radio signal representing a pressure prevailing inside the pressurised fluid container, and
- an electronic unit (12) electrically connected to said radio-frequency reader (11), said electronic unit (12) being configured to process and/or record said pressure value received by the radio-frequency reader (11),

the first radio signal and the second radio signal having a so-called "ultra-high" frequency lying between 850 and 950 MHz,

**14.** Method for measuring the pressure prevailing inside a pressurized fluid container, said method comprising the following steps:

- arranging, integrally with said pressurised fluid container, a device (1) for measuring the pressure prevailing inside said pressurised fluid reservoir, said device comprising a dial (2) comprising an angular index (3) carrying information representing pressure values, and a needle (4) able to rotate about an axis (AA) transverse to the dial (2), said needle (4) being able to occupy a plurality of angular positions with regard to the angular index (3) depending on the pressure prevailing inside the pressurised fluid container,
- indicating at least one angular position of the needle (4),
- producing an electrical signal representing the angular position of the needle (4), and
- calculating a pressure value prevailing inside the pressurised fluid container from said angular position of the needle (4),

**characterised in that** it comprises the following steps:

- electrically supplying the device (1) for measuring the pressure prevailing inside said pressurised fluid container by converting a first radio signal received by said device (1), and
- transmitting remotely via a second radio signal said electrical signal representing the pressure value prevailing inside the pressurised fluid container,

the first radio signal and the second radio signal having a so-called "ultra-high" frequency lying between 850 and 950 MHz.

Figure 1

Figure 2

Figure 3

Figure 4

Figure 5

Figure 6

**EP 2 887 042 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2327964 A
- US 20020144555 A
- US 20090212767 A
- JP 61193043 A
- US 20030153987 A
- EP 0501186 A
- US 20110152825 A